# EUROPÄISCHE PATENTSCHRIFT

(11) **EP 0 773 334 B1**
(45) Veröffentlichungstag und Bekanntmachung des Hinweises auf die Patenterteilung: **23.05.2001**
(21) Anmeldenummer: 96116073.6
(22) Anmeldetag: 08.10.1996
(51) Int. Cl.: E04D 13/14, E04D 1/36

(54) **Durchgangspfanne für ein Schrägdach**
Lead-through roofing tile
Tuile à traversée de toit

(30) Priorität: 08.11.1995 DE 29517705 U; 11.12.1995 DE 29519599 U
(43) Veröffentlichungstag der Anmeldung: 14.05.1997
(73) Patentinhaber: Klöber, Johannes, 58256 Ennepetal (DE)
(72) Erfinder: Pocher, Günther, 58285 Gevelsberg (DE)
(74) Vertreter: Grundmann, Dirk, Dr.

(56) Entgegenhaltungen:
- WO-A-93/02262
- DE-A- 3 937 571
- FR-A- 1 566 142
- FR-A- 2 135 680
- FR-A- 2 500 872
- GB-A- 1 310 059
- GB-A- 2 111 112

## Beschreibung

Die Erfindung betrifft eine Dach-Durchgangspfanne für ein Schrägdach, mit einer sich im wesentlichen eben erstreckenden, aus einem steifen Kunststoff bestehenden Eindeckungsplatte, welche eine Durchtrittsöffnung aufweist.

Derartige Dach-Durchgangspfannen sind in einer Vielzahl von Ausführungsvarianten bekannt. Die Durchtrittsöffnung erlaubt beispielsweise eine Hinterlüftung des Daches und kann hierfür haubenartige Überdeckungen als Wetterschutz aufweisen. Es dienen solche Dach-Durchgangspfannen auch dem Anschluß oder der Durchführung von Abluftleitungen, beipielsweise eines Wrasenabzuges. Aus der EP-A-0 374 972 ist eine Dachpfanne mit Durchtrittsöffnung bekannt, welche im Hinblick auf eine an unterschiedlichst geformte Dachziegel dichtende Anpaßbarkeit und universelle Verwendung eine Grundplatte mit im wesentlichen reiner Haltfunktion aufweist, die von einer weichen Abdeckung überdeckt und überragt wird. Die überragenden Abschnitte der Abdeckung passen sich der Kontur der Dachpfannen dichtend an, wodurch diese Durchgangspfanne sehr universell einsetzbar ist. Es ist jedoch diese Durchgangspfanne sehr aufwendig gestaltet. Ferner muß sie sehr sorgfältig gehandhabt werden, um eine dichtende Anpassung auch wirksam zu erhalten.

Es ist Aufgabe der Erfindung, eine möglichst universell an unterschiedlich geformte Dachpfannen anpaßbare Dach-Durchgangspfanne zu schaffen, welche leicht handhabbar, stabil und ökonomisch herstellbar ausgebildet ist.

Gelöst wird die Aufgabe durch die im Anspruch 1 angegebene Erfindung. Gemäß Anspruch 1 ist darauf abgestellt, daß randseitig die Eindeckungsplatte in eine mit der Eindeckungsplatte festverbundene Dichtlippe aus einem elastischen Kunststoff übergeht. Es verbleibt damit der Eindeckungsplatte eine tragende und vor allem die abdeckende Eigenschaft bekannter Dach-Durchgangspfannen der eingangs genannten Art. Der dichtende Anschluß an die angrenzende Dacheindeckung erfolgt durch die elastische Dichtlippe. Die feste Verbindung zwischen der Dichtlippe und der Eindeckungsplatte läßt eine Undichtigkeit der Dach-Durchgangspfanne im Bereich dieses Überganges nicht zu. Vielmehr erscheint sie einstückig ausgebildet. Positionierungsprobleme hinsichtlich beispielsweise eines durchzuführenden Entlüftungsrohres einerseits und Anbindung an die vorhandene Dacheindeckung andererseits werden durch das Spiel der elastischen Dichtlippe weitestgehend gemildert. Andererseits ist für eine genaue Positionierung einer erfindungsgemäßen Dach-Durchgangspfanne, welche traufseitig auf einer Lattung aufliegende Dachziegel überdeckt, insbesondere auch mit den Merkmalen des Anspruches 1, gemäß Anspruch 2 darauf abgestellt, daß die Eindeckungsplatte unterseitig vorstehend einen Anschlag für ihre traufseitige Abstützung in Dach-Neigungsrichtung auf den dortigen Dachziegeln aufweist. Firstseitig kann bei freier Auflage der Eindekkungsplatte auf der Lattung diese von den firstseitigen Dachziegeln überdeckt sein, womit in Neigungsrichtung der Längenausgleich erfolgen kann. Dies insbesondere dann, wenn firstseitig eine Dichtlippe vorgesehen ist. Diese kann sich dann problemlos der unterseitigen Profilierung der firstseitigen Dachziegel anpassen und durch das Gewicht der Ziegel niedergedrückt die Dichtfunktion ausüben. Stützt sich darüber hinaus die Eindeckungsplatte traufseitig auf den dortigen Dachziegeln ab, kann durch das auf dem Anschlag ruhende Gewicht oder durch die Ausbildung des Anschlages auch verhindert werden, daß bei Sturm die Durchgangspfanne traufseitig angehoben wird. Um hier auch zu einer guten Abdichtung gegen Nässe oder beispielsweise Flugschnee zu kommen, ist insbesondere bei einer Oberflächenprofilierung der traufseitigen Dachziegel gemäß der Dach-Durchgangspfanne nach Anspruch 3 darauf abgestellt, daß die Eindekkungsplatte quer zur Neigungsrichtung unterseitig vorstehende elastische Zungen in einer Überdeckungsanordnung in Neigungsrichtung für einen dichtenden Anschluß an die Oberfläche der Dachziegel aufweist. Die elastischen Zungen passen sich der Oberflächenprofilierung an, wobei die Eindeckungsplatte selbst, da sie steif ausgeführt ist, die Profilierung überdeckt. In Ausgestaltung der Erfindung ist vorgesehen, daß der Übergang von der Eindeckungsplatte zur Dichtlippe eine form- und/oder kraftschlüssige Ausbildung aufweist. Hierbei ist zunächst beachtlich, daß durch den Übergang keine Undichtigkeit entsteht. Darüber hinaus soll die Anbindung der Dichtlippe an die Eindeckungsplatte auch mechanisch stabil sein, um ein Niederdrücken bzw. Anpassen der Dichtlippe an die umgebende Dacheindeckung auch sicher zu gewährleisten, wobei dann gleichfalls keine Undichtigkeit auftreten darf. Ein derartiger Übergang ist bevorzugt durch eine an die Eindeckungsplatte angespritzte Dichtlippe geschaffen. Dies ist auch herstellungstechnisch von Vorteil, da zunächst eine Kunststoff-Eindeckungsplatte in einem ersten Spritzwerkzeug gespritzt werden kann und daran anschließend problemlos auch die Dichtlippe anspritzbar ist, wobei keine weiteren Montagearbeiten anfallen. Alternativ kann vorgesehen sein, daß die Dichtlippe an die Eindeckungsplatte angeschweißt ist, wobei ein Hochfrequenz-Schweißverfahren bevorzugt wird. Auch hierdurch ist eine dichte Verbindung zwischen Dacheindeckungsplatte und Dichtlippe gegeben. Es ist jedoch hierbei ein gesonderter Verfahrensschritt zur Herstellung der erfindungsgemäßen Durchgangspfanne vorzusehen, welcher bei einer gesonderten Herstellung der Dichtlippe beispielsweise durch ein Tiefziehverfahren vorteilhaft anwendbar ist. In Ausgestaltung ist dann weiter bevorzugt, daß randseitig geschlossen umlaufend die Eindeckungsplatte in mit der Eindeckungsplatte festverbundene Dichtlippen aus einem elastischen Kunststoff übergeht. Damit ist die Eindekkungsplatte allseitig mit Dichtlippen für einen dichtenden Anschluß randseitig eingefaßt und ist eine gute Anpassung durch deren Elastizität an die umgebenden Ziegel der Dacheindeckung gewährleistet. Dazu ist weiter vorgesehen, daß der freie Rand einer Dichtlippe gegenüber der Erstreckungsebene der Eindeckungsplatte angestellt ist. Insbesondere ist daran gedacht, daß eine traufseitige Dichtlippe als Schürze ausgebildet gegenüber der Erstreckungsebene der Eindeckungsplatte in Einbaulage nach unten weisend und/oder die weiteren Dichtlippen nach oben weisend angestellt sind. Letztere, vorzugsweise die firstseitige und die in Neigungsrichtung verlaufenden Dichtlippen, werden durch die anschließenden Dachziegel überdeckt und durch deren Eigengewicht niedergedrückt. Hierdurch kommt es zu dem abgedichteten Einbau, wobei die Positionierung der Dach-Durchgangspfanne mit Spiel möglich ist. Hieraus resultiert auch die Forderung an das Maß der Elastizität, welche eine zur Abdichtung ausreichende Vorspannung einerseits gewährleisten und andererseits eine durch das Eigengewicht der benachbarten Ziegel in eine Endlage hervorgerufene Verformbarkeit erlauben muß. Die nach unten weisende Schürze paßt sich dagegen durch ihre eigene Vorspannung einer Ziegelkontur nur grob an. Dort erfolgt die Abdichtung im wesentlichen durch die elastischen Zungen in Überdeckungsanordnung. In weiterer Ausgestaltung ist vorgesehen, daß bei einer bevorzugt umlaufenden Ausbildung der Dichtlippen die firstseitige Dichtlippe von den in Dachneigungsrichtung sich erstreckenden Dichtlippen durch Einschnitte getrennt ist, deren tiefster Punkt jeweils bevorzugt auf die Wurzel der Anstellung weist. Hierbei werden V-förmige Einschnitte weiter bevorzugt. Hierdurch wird die nötige elastische Beweglichkeit der angestellten Dichtlippen weiter verbessert, so daß diese sich leicht an die Überdeckung durch die umgebenden Dachziegel anpassen können. Darüber hinaus ist eine gute Abdichtfunktion gewährleistet. Durch den Einschnitt in die Richtung auf die Wurzel der Anstellung zu, kann durch die Ausnutzung der Elastizität sich der Anstellwinkel auch geringfügig ändern. Für diesen kann ferner vorgesehen sein, daß er zwischen dem angestellten freien Rand einer Dichtlippe und der Erstreckungsebene der Eindeckungsplatte zum freien Rand hin zunimmt. Auch hierdurch wird auf das Elastizitätsverhalten der Dichtlippe positiv Einfluß genommen. Darüber hinaus wird sichergestellt, daß ein einwandfreier Wasserabfluß auch gegeben ist. Das Elastizitätsverhalten und damit insbesondere auch die Anlage der Dichtlippe an darunterliegende bzw. darüberliegende Dachziegel kann ferner dadurch beeinflußt werden, daß die mit einem Rand der Eindeckungsplatte festverbundene Dichtlippe Versteifungsrippen aufweist, die sich senkrecht zu dem Rand erstrecken. Die zwischen solchen Versteifungsrippen liegenden Abschnitte der Dichtlippe können vergleichsweise materialsparend dünn ausgeführt sein. Dennoch kommt es zu einer guten Anlage der freien Ränder an die Dachziegel, da diese Anlage durch die Versteifungsrippen bestimmt ist. Das verwendete Material bzw. die Querschnittsabmessungen dieser Versteifungsrippen sind mit für das Elastizitätsverhalten maßgeblich. Darüber hinaus kann vorgesehen sein, daß die Dichtlippe zumindest abschnittsweise und bevorzugt Versteifungsrippen einen Kern aus einem harten, elastischen Kunststoff aufweisen, welcher weiter bevorzugt die einstückig mit der Eindeckungsplatte ausgebildet ist. Einstellung des Elastizitätsverhaltens und mechanische Stabilität sind hierdurch gegeben. In weiterer Ausgestaltung kann vorgesehen sein, daß die mit einem Rand der Dacheindeckungsplatte festverbundene Dichtlippe insbesondere zwischen Versteifungsrippen einen gewellten Querschnitt aufweist, wobei die Wellentäler bzw. Wellenberge sich im wesentlichen senkrecht zu dem Rand erstrecken. Hierdurch ist insbesondere bei einer als Schürze ausgebildeten Dichtlippe eine sehr gute Auflage auf insbesondere eine ballige bzw. muldenartig vertieft ausgebildete Ziegelkontur gegeben, da sich quer zur Dachneigungsrichtung aufgrund des gewellten, ziehharmonikaähnlichen Querschnittes sich durch eine Längenänderung die Schürze gemäß der Kontur einstellen kann. Hierdurch kann die Schürze der Kontur der Dachziegel auch leicht folgen. Dabei ist durch den wellenförmigen Querschnitt gleichfalls wiederum ein guter Wasserabfluß gewährleistet. Diesem dient auch die Maßnahme, daß bei einer bevorzugt umlaufenden Ausbildung der Dichtlippen der Anstellwinkel der in Neigungsrichtung verlaufenden Dichtlippen zur Traufseite hin abnimmt und diese Dichtlippen in die Schürze übergehen. Hierdurch ist ein glatter, dichtender Übergang traufseitig geschaffen. Da dieser Übergangsbereich für eine dichte Eindeckung kritisch ist, wird hier eine Abstützung der Eindeckungsplatte durch einen unterseitig vorstehenden Anschlag in Dach-Neigungsrichtung auf der traufseitig angeordneten Ziegelreihe bevorzugt, womit eine genaue Positionierung dieses kritischen Bereiches gegeben ist und dieser entsprechend den verwendeten Dachziegeln dichtend überdeckt ist. Der Anschlag kann durch zwei unterseitig von der Eindeckungsplatte abragende Stege, welche zum Plattenaußenrand hin angeordnet sind, ausgebildet sein. Ist die Ziegelreihe, auf welcher sich die Eindeckungsplatte gegebenenfalls abstützt, stark profiliert, übernehmen, wie eingangs erwähnt, elastische Zungen dort die Dichtungsaufgabe zwischen der Oberseite der Dachziegel und der Unterseite der Eindeckungsplatte. Hierbei können zwei quer zur Neigungsrichtung verlaufende Reihen von Zungen vorgesehen sein, welche gegeneinander auf Lücke versetzt sind. Alternativ ist vorgesehen, durch eine quer zur Neigungsrichtung verlaufende Reihe von parallel ausgebildeten Zungen, die sich unter einem Winkel zwischen der Neigungsrichtung und quer dazu erstrecken. Auch diese Zungen können aus einem elastischen Material an die Dacheindeckungsplatte angespritzt sein und dies im gleichen Spritzvorgang wie eine Dichtlippe. Gegebenenfalls besteht auch die Möglichkeit, die Zungen mit der traufseitigen Schürze mit auszubilden.

Die Erfindung wird anhand der Zeichnung näher erläutert, in der lediglich Ausführungsbeispiele dargestellt sind. In der Zeichnung zeigt:
- Fig. 1: die Draufsicht auf eine erfindungsgemäße Dach-Durchgangspfanne,
- Fig. 2: einen Schnitt gemäß der Linie II-II in Fig. 1,
- Fig. 3: einen Schnitt gemäß der Linie III-III in Fig. 1,
- Fig. 4: einen Schnitt gemäß der Linie IV-IV in Fig. 1,
- Fig. 5: einen Schnitt gemäß der Linie V-V in Fig. 1,
- Fig. 6: in Draufsicht ein zweites Ausführungsbeispiel einer Dach-Durchgangspfanne,
- Fig. 7: die Unteransicht der Dach-Durchgangspfanne gemäß Fig. 6,
- Fig. 8: die Seitenansicht gemäß des Pfeiles VIII in Fig. 6,
- Fig. 9: einen Schnitt gemäß der Linie IX in Fig. 6,
- Fig. 10: eine Detailvergrößerung aus dem Schnitt gemäß Fig. 9,
- Fig. 11: einen Schnitt gemäß der Linie XI-XI in Fig. 6,
- Fig. 12: in Draufsicht eine Dach-Durchgangspfanne, anhand deren weitere Ausführungsdetails beschrieben werden,
- Fig. 13: einen Schnitt gemäß der Linie XIII-XIII in Fig. 12,
- Fig. 14: einen Schnitt gemäß der Linie XIV-XIV in Fig. 12,
- Fig. 15: einen Schnitt gemäß der Linie XV-XV in Fig. 12 und
- Fig. 16: einen Schnitt durch eine gewellte, als Schürze ausgebildete Dichtlippe, die auf darunterliegenden Dachziegeln aufliegt.

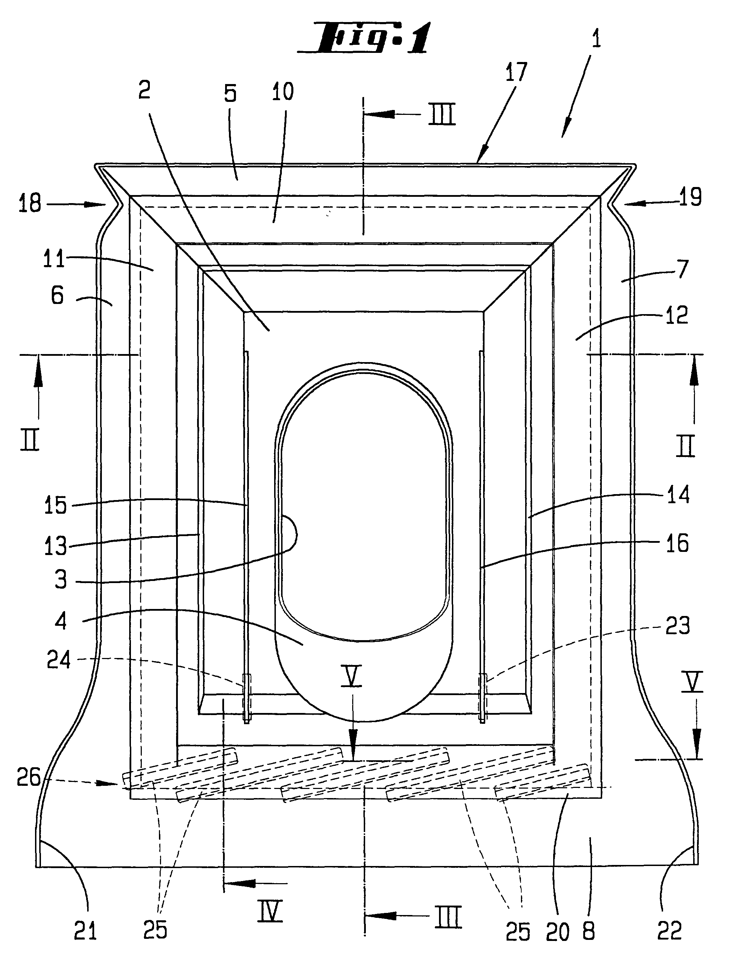

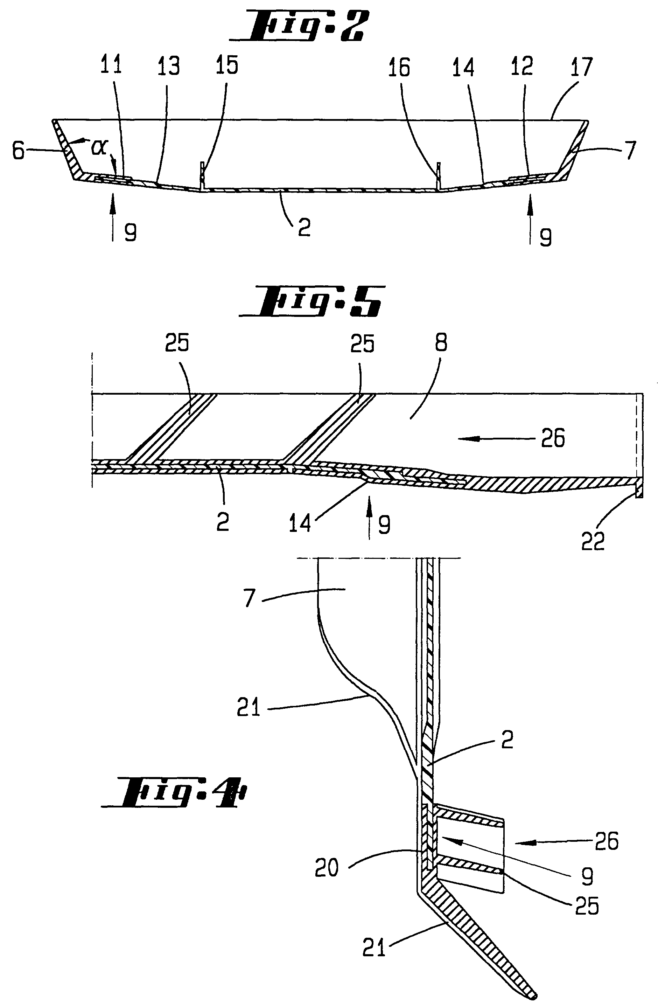

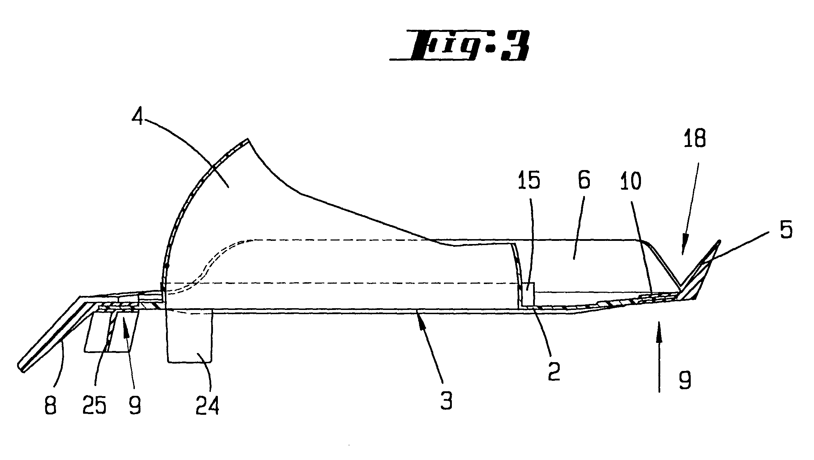

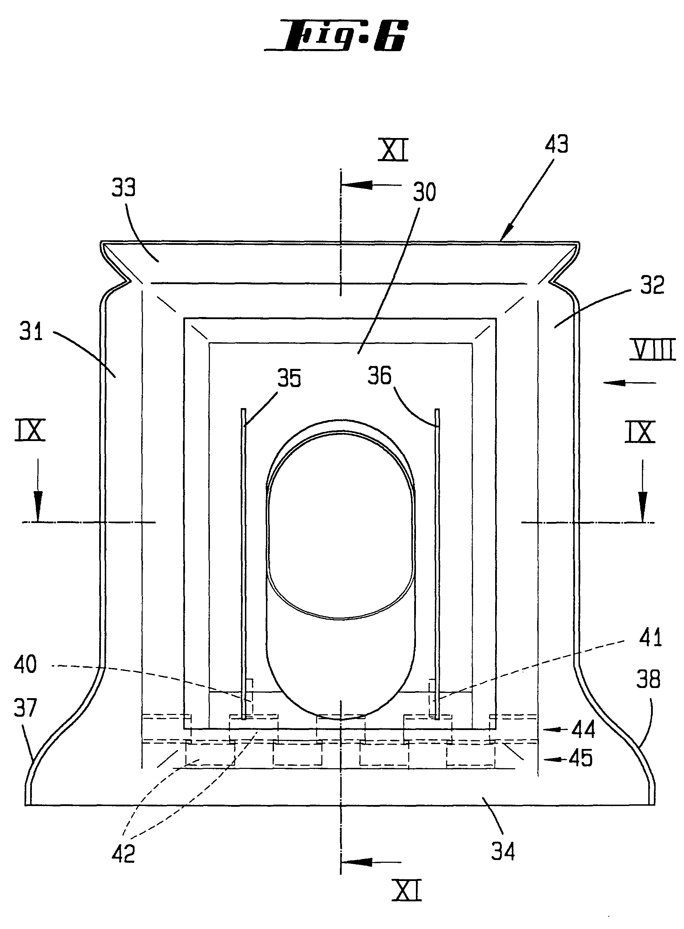

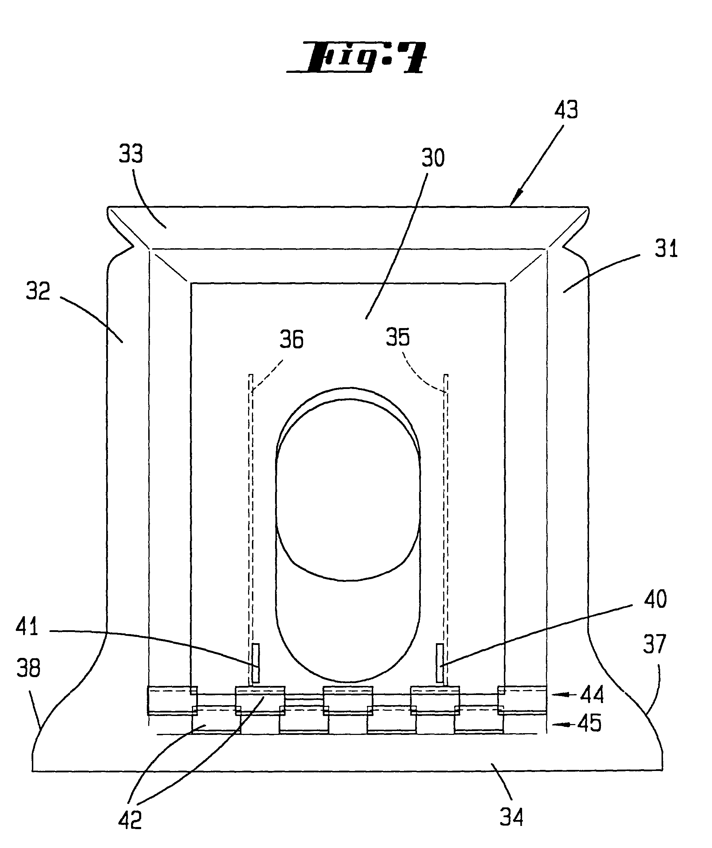

Die Fig. 1 bis 5 zeigen ein erstes Ausführungsbeispiel einer Dach-Durchgangspfanne 1. Diese weist eine sich im wesentlichen eben erstreckende Eindeckungsplatte 2, aus einem steifen Kunststoff, beispielsweise einem Hart-Polyvinylchlord-Kunststoff, auf. Längsmittig zur Schnittlinie III-III ist eine Durchtrittsöffnung 3 angeordnet. Berandet und teilweise überdeckt ist die Durchtrittsöffnung dachoberseitig von einem Durchgangsdom 4, welcher ein Langloch beispielsweise zur Durchführung eines Entlüftungsrohres freiläßt. Durch die Ausbildung des Langloches ist die Dach-Durchgangspfanne 1 für verschiedene Dach-Neigungswinkel auch geeignet.

Randseitig ist die Eindeckungsplatte 2 mit einer firstseitigen Dichtlippe 5, zwei in Neigungsrichtung verlaufenden Dichtlippen 6,7 und einer als Schürze 8 ausgebildeten Dichtlippe versehen, welche zur Traufe hinweist. Die Dichtlippen 5,6,7 und die Schürze 8 bestehen aus einem elastischen Kunststoff, beispielsweise einem Weich-Polyvinylchlorid-Kunststoff und sind mit der Eindeckungsplatte 2 fest verbunden. Diese Verbindung ist mechanisch fest und insbesondere auch wasserdicht auszuführen. Dazu weisen die Übergänge 9 zwischen der Eindekkungsplatte 2 und den Dichtlippen 5,6,7 und der Schürze 8 hier eine form- und/oder kraftschlüssige Ausbildung auf, wodurch eine mechanisch stabile und wasserdichte Anbindung gegeben ist. Dies insbesondere dann, wenn wie bevorzugt vorgesehen ist, daß die Dichtlippen 5,6,7 und die Schürze 8 aus einem weichen Plastikmaterial bestehend an die Eindeckungsplatte 2 aus einem harten Plastikmaterial bestehend angespritzt sind.

Wie der Fig. 1 entnehmbar, erfolgt dieses Anspritzen der Dichtlippen 5,6,7 und der Schürze 8 randseitig geschlossen umlaufend um die Eindeckungsplatte 2. Wie die Schnitte gemäß den Fig. 2 bis 5 auch zeigen, erfolgt der Übergang 9 zwischen den Dichtlippen 5,6,7 und der Schürze 8, zu der Eindeckungsplatte 2 oberseitig der Dach-Durchgangspfanne 1 überlappend und mit einem Absatz 10 der firstseitigen Dichtlippe 5. In gleicher Weise überlappen auch die in Neigungsrichtung verlaufenden Dichtlippen 6,7 mit gegenüber der Oberseite der Eindeckungsplatte abgestuften Überlappungen 11,12. Ist, wie hier dargestellt, die Durchgangspfanne 1 zu ihrem Außenrand hin leicht gegenüber ihrer Erstreckungsebene angestellt, ist hierdurch ein guter Wasserabfluß hin zum Zentrum der Dacheindeckungsplatte 1 gegeben. Diesem Wasserablauf dienen dann in Neigungsrichtung verlaufende Abstufungen 13,14 in der Oberseite der Eindeckungsplatte 2. Der Wasserablauf wird dann zwischen diesen Abstufungen 13,14 und zwei Rippen 15,16, rechts und links des Durchgangsdoms 4, erfolgen.

Der freie Rand 17 der Dichtlippen 5,6,7 ist gegenüber der Erstreckungebene der Eindeckungsplatte 2 unter einem Winkel alpha angestellt. Es sei bemerkt, daß der freie Rand 17 dieser drei Dichtlippen 5,6,7 in einer gemeinsamen Ebene ausgebildet ist und daher lediglich ein Positionszeichen nur aufweist. Hier können unterschiedliche Höhenabstufungen der firstseitigen Dichtlippe 5 gegenüber den in Neigungsrichtung verlaufenden Dichtlippen 6,7 beispielsweise auch gegeben sein. So ergibt sich jedoch in firstseitiger Richtung ein gleichsam schüsselförmiger Anblick der Dach-Durchgangspfanne 1, vergl. Fig. 2.

Da die Dichtlippen 5,6,7 und die Schürze 8 die Eindekkungsplatte 2 randseitig geschlossen umlaufend umgeben, ist durch V-förmige Einschnitte 18,19 eine weitgehend voneinander unabhängige, elastische Anpassung der Dichtlippen 5,6,7 an die nicht dargestellte, umgebende Dacheindeckung möglich. Hierzu sind diese Dichtlippen 5,6,7 auch nach oben mit Bezug auf die Eindeckungslage der Eindeckungsplatte unter einem Winkel alpha angestellt. Sie werden in der Eindeckungslage von den benachbarten Dachziegeln überdeckt und durch deren Eigengewicht in eine niedergedrückte, federnd anliegende Dichtlage gebracht.

Undichtigkeiten durch die Einschnitte 18,19 können gegebenenfalls durch zusätzliche Rippen im Bereich der angespritzten Dichtlippen 5,6 bzw. 5,7 oder auch auf der Eindeckungsplatte 2 vermieden werden, die beispielsweise vom Wind hochgetriebenes Wasser abfangen.

Der Anstellwinkel alpha der in Dach-Neigungsrichtung sich erstreckenden Dichtlippen 6,7 verkleinert sich zur Traufseite hin. Hierdurch wird ein kontinuierlicher Übergang von den Dichtlippen 6,7 zur Schürze 8 hin erreicht, wobei sich in diesem Übergangsbereich eine Verbreiterung in Draufsicht der Dach-Durchgangspfanne 1 ergibt. Die Schürze 8 ist gegenüber der Erstreckungsebene der Eindeckungsplatte 2 nach unten angestellt. Der oberseitige Übergang 9 zwischen der Eindeckungsplatte 2 und der Schürze 8 erfolgt stufenlos und möglichst glatt, um ein Eindringen von Wasser zu verhindern, vergl. Fig. 4. Auch eine oberseitige formschlüssige Überdeckung 20 der Eindeckungsplatte 2 durch das weiche Material der Schürze 8 kann vorgesehen sein, um den Wasserabfluß zu optimieren. Randseitig in Dach-Neigungsrichtung verlaufend sind seitliche Ränder 21,22 an der Schürze 8 noch vorgesehen, welche gleichsam als Leitfläche das Wasser lediglich traufseitig ablaufen lassen.

Durch den Übergang der in Neigungsrichtung verlaufenden Dichtlippen 6,7, mit abnehmenden Anstellwinkel alpha in die Schürze 8 ist hier ein kritischer Eindeckungsbereich gegeben. Hier ist darauf zu achten, daß traufseitig der Anschluß der Dacheindeckungsplatte 2 an die dortige Ziegelreihe derart vorgenommen ist, daß dieser kritische Übergangsbereich auch sicher durch seitliche Dachziegel abgedeckt, ist. Es sieht deshalb die Erfindung für derartige Dach-Durchgangspfannen 1 mit einer sich im wesentlichen eben erstreckenden Eindeckungsplatte 2, welche traufseitig auf einer Lattung aufliegende Dachziegel überdeckt vor, daß die Eindeckungsplatte 2 unterseitig vorstehend einen Anschlag, hier bestehend aus zwei unterseitig abragenden Stegen 23,24 aufweist. Mit diesen Anschlag-Stegen 23,24 stützt sich die Dach-Durchgangspfanne in Dach-Neigungsrichtung auf der traufseitig angeordneten Dachziegelreihe ab. Damit ist in Dach-Neigungsrichtung eine genaue und exakte Positionierung derart gegeben, daß sichergestellt ist, daß die seitlichen Übergangsbereiche auch sicher durch überdekkende Dachziegel abgedichtet sind.

Obgleich die Schürze 8 aus einem gegenüber der Eindekkungsplatte weichen Kunststoffmaterial besteht, wird sich die Schürze 8 unter ihren eigenen Vorspannung einer Oberflächenprofilierung der traufseitigen Dachziegelreihe nur wenig anpassen. Hier kommt es vielmehr zu einer vergleichsweisen geraden Überdeckung durch die Schürze 8. Um aber auch hier das Eindringen von beispielsweise Flugschnee zu verhindern, ist bei derartigen Überdeckungen der traufseitigen Ziegelreihe durch eine Eindeckungsplatte als weitere Maßnahme eine sich quer zur Neigungsrichtung erstreckende Reihe 26 von unterseitig der Eindeckungsplatte frei vorstehenden, elastischen Zungen 25 vorzusehen. Diese sind in Neigungsrichtung in einer Überdeckungsanordnung, so daß in dieser Richtung kein direkter Eintritt in den Raum unter der Eindeckungsplatte 2 möglich ist. Hierfür sind die einzelnen Zungen 25 parallel zueinander ausgebildet, wobei jede sich unter einem Winkel zwischen der Neigungsrichtung und quer dazu erstreckt. Dadurch ist die Überdeckungsanordnung ausgebildet.

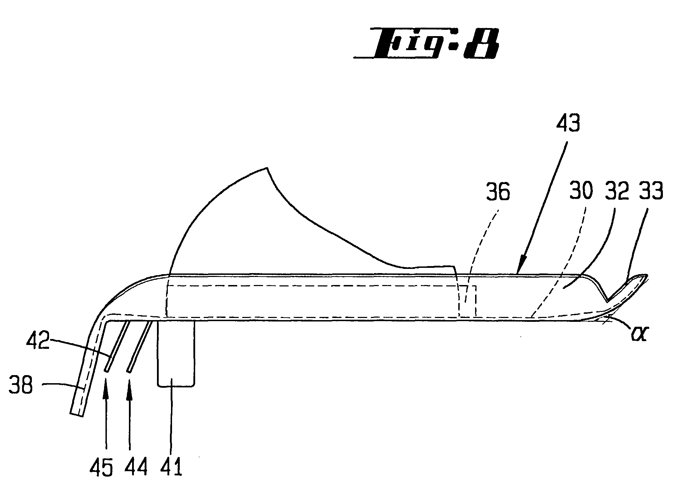

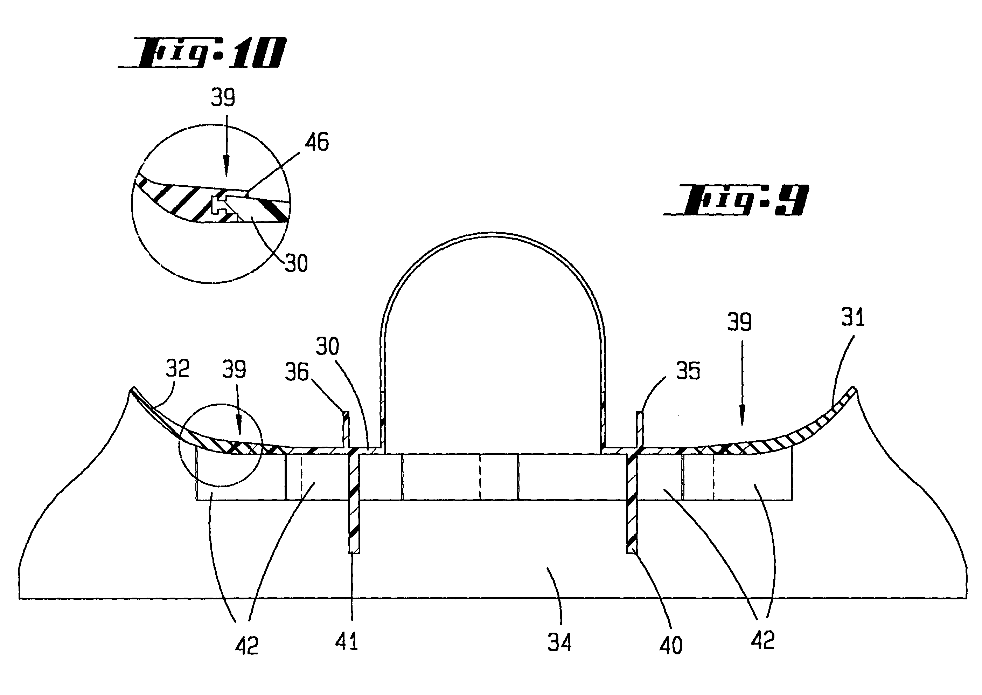

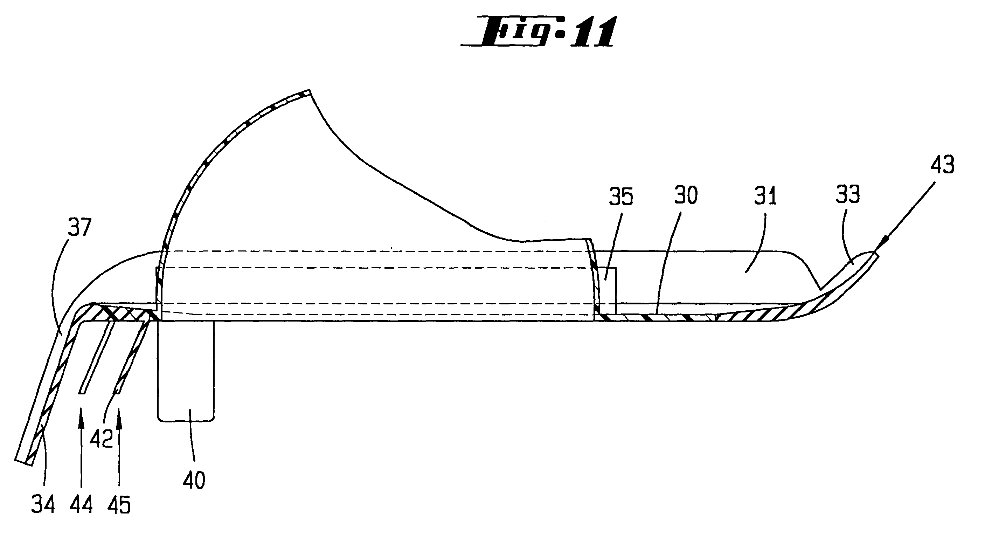

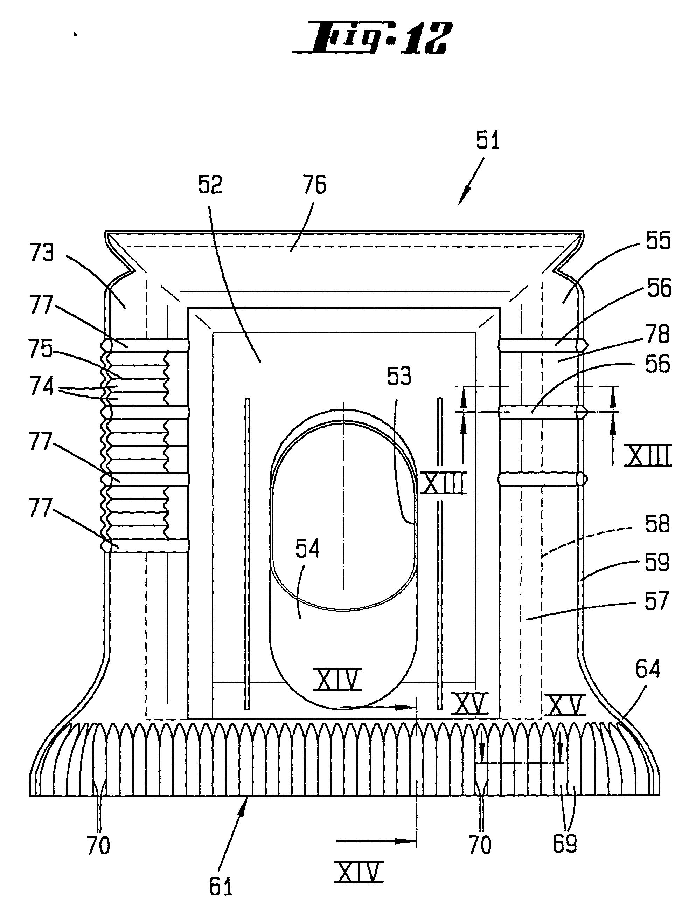

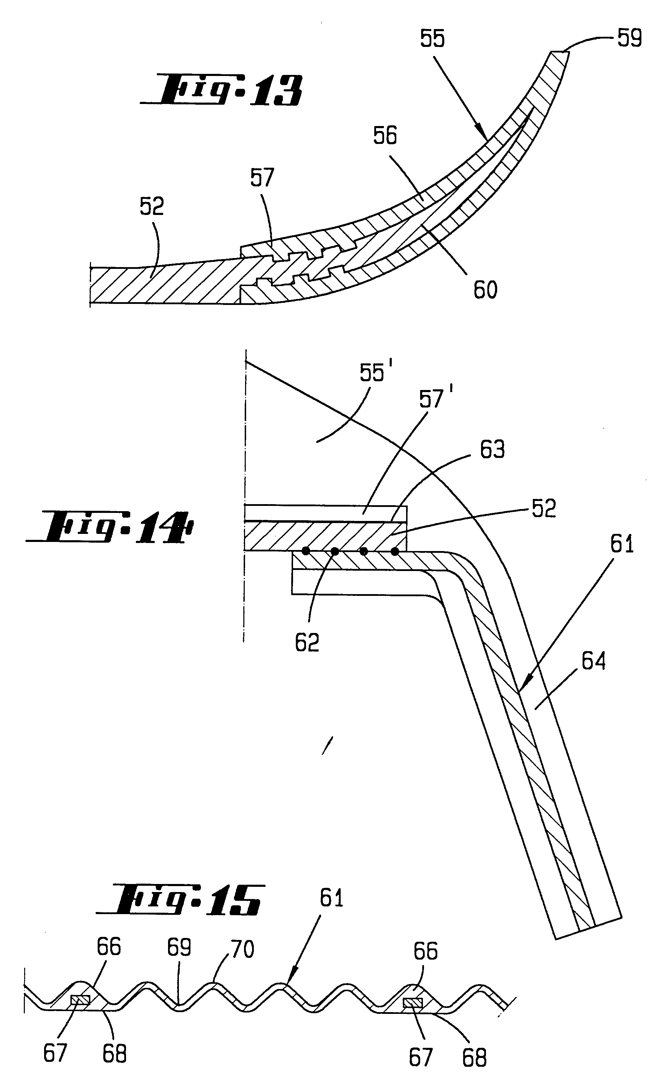

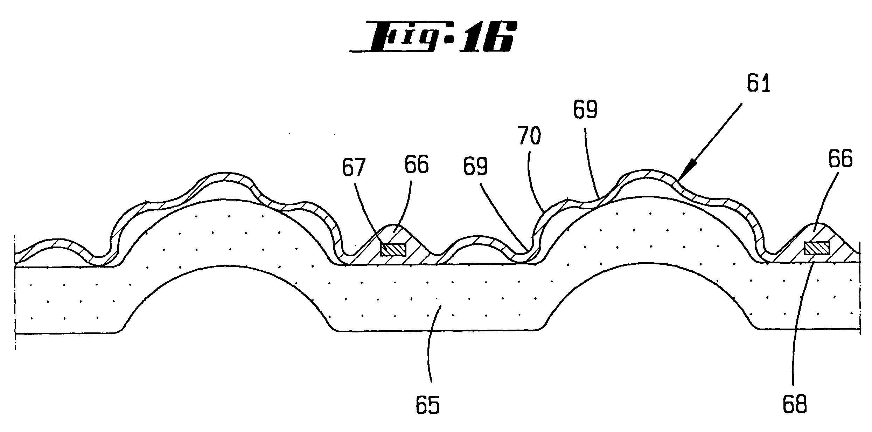

Der Aufbau des zweiten Ausführungsbeispieles gemäß den Fig. 6 bis 11 entspricht vom grundlegenden her dem vorangegangenen Ausführungsbeispiel. Die dort gezeigte Eindeckungsplatte 30 weist gleichfalls angespritzte Dichtlippen 31,32 in Dach-Neigungsrichtung, eine firstseitige Dichtlippe 33 und eine Schürze 34 randseitig umlaufend auf. Die Oberseite der Eindeckungsplatte 30 und der gesamten Dach-Durchgangspfanne zeigt auch hier wieder eine wannenartige Ausbildung, so daß von der Dach-Durchgangspfanne aufgefangenes Regenwasser in traufseitige Richtung geführt, u.a. durch Rippen 35,36 kanalisiert, und über die Schürze 34 auf die traufseitigen Dachziegel abgeführt wird. Hierzu weist die Schürze 34 oberseitig vorstehende Ränder 37,38 gleichfalls auf. Der Schnitt gemäß Fig. 9 und insbesondere die Detailvergrößerung gemäß Fig. 10 zeigen, daß der Übergang 39 von der steifen Eindeckungsplatte 30 hier zu der Dichtlippe 32 durch einen Nuteneingriff kraft- und formschlüssig ausgebildet ist. Ebenso kommt einer derartigen Ausbildung die Funktion einer Labyrinth-Dichtung gleichsam zu. Oberseitig wird zum besseren Wasserabfluß von den Dichtlippen 31,32,33 her durch einen Überstand 46 die Eindeckungsplatte 30 überdeckt. Unterseitig erfolgt dieser Übergang glatt in einer Ebene. Es können dort ferner Unterbrechungen insbesondere in der Anspritzung der als Schürze 38 ausgebildeten Dichtlippen vorgesehen sein, um hier gegebenenfalls durch Kapillarwirkung zwischen die beiden Kunststoffteile eingedrungenes Wasser auf die von der Schürze 38 bzw. der Eindeckungsplatte 38 überdeckten traufseitigen Ziegel abtropfen zu lassen.

Von einem mittleren Bereich der Eindeckungsplatte 30 ausgehend, sind hier sowohl Übergangsflächen der Eindekkungsplatte 30 selbst als dann auch insbesondere der Dichtlippen 31,32,33 mit einem stetig ansteigenden Anstellwinkel versehen. D.h., daß zum freien Rand 43 hin die Dichtlippen 31,32,33 immer steiler angestellt sind und beispielsweise bogenförmig verlaufen, vergl. auch die Seitenansicht gemäß Fig. 8. Unterseitig zeigt das zweite Ausführungsbeispiel zwei Stege 40,41 als Anschlag zum Ansetzen der Eindeckungsplatte 30 an eine traufseitige Ziegelreihe. Zwischen diesen Stegen 40,41 und der traufseitigen Schürze 34 sind in zwei Reihen 44,45 quer zur Neigungsrichtung sich in dieser Richtung erstreckende Zungen 42 mit der Schürze 8 ausgebildet. Durch die zweireihige Anordnung sind Zungen 42 in einer Überdeckungsanordnung ermöglicht, wodurch hier auch in Neigungsrichtung ein Eindringen von vom Wind eingetriebenen Oberflächenwasser nur schwerlich möglich ist, da sich diese Lippen auch stark ausgebildeten Oberflächenprofilierungen der traufseitigen Ziegelreihe bürstenartig anpassen können.

Anhand der Dach-Durchgangspfanne 51 werden weitere Details, die für sich alleine oder in Kombination auftreten können, weiter beschrieben. Die dortige Eindekkungsplatte 52 mit von einem Durchgangsdom 54 überdeckten Dachdurchtrittsöffnung 53 weist hier zu Darstellungszwecken unterschiedlich ausgebildete Dichtlippen auf. Die in Fig. 12 rechts dargestellte, sich in Einbaulage in Dachneigungsrichtung erstreckende Dichtlippe 55 weist im regelmäßigen Abstand von beispielsweise 4 cm Verstärkungsrippen 56 auf. Diese verlaufen im wesentlichen senkrecht zum von einer Überlappung 57 überdeckten Rand 58 der Eindeckungsplatte 52 hin zu dem freien Rand 59 der Dichtlippe 55.

Die Versteifungsrippen 56 können einfach durch eine Materialverstärkung ausgebildet sein, jedoch ist bevorzugt, vergl. Fig. 13, daß die Versteifungsrippen 56 einen Kern 60 aus einem harten, elastischen Kunststoff aufweisen. Insbesondere ist dieser Kern aus demselben Kunststoff wie die Eindeckungsplatte 52 selbst und mit dieser, wie gezeigt, einstückig ausgebildet. Auch bei der Versteifungsrippe 56 ist zur Eindeckungsplatte 52 oberseitig eine Abstufung zwischen der Überlappung 57 und der Oberseite der Eindeckungsplatte 52 wieder gegeben, während unterseitig der Übergang in einer Ebene erfolgt. Der Schnitt gemäß Fig. 13 zeigt ferner, daß die Dichtlippe 55 sowie die Versteifungsrippen 56 sich zu ihrem freien Rand 59 hin verjüngen, vergl. auch Fig. 2, wobei durch die zunehmende Verjüngung das Maß der Elastizität auch wiederum einstellbar ist. Fig. 13 zeigt eine an die Eindeckungsplatte 52 angespritzte Dichtlippe 55 mit Versteifungsrippe 56. Für eine sichere Verbindung zwischen dem weichen und dem harten Kunststoff sind Hinterschneidungen dort auch wiederum vorgesehen.

Eine alternative Befestigungsmöglichkeit der Dichtlippen wird anhand der Fig. 14, einen Schnitt durch die als Schürze 61 ausgebildete traufseitige Dichtlippe näher erläutert. Die kreisförmigen Bereiche idealisieren Schweißstellen 62 der unterseitig der Eindeckungsplatte 52 angeschweißten Schürze 61. Auch hierdurch entsteht eine wasserdichte, mechanisch stabile Verbindung zwischen den Kunststoffmaterialien. Dies insbesondere dann, wenn ein Hochfrequenz-Schweißverfahren benutzt wird. Denkbar ist auch ein Verkleben der beiden Kunststoffmaterialien, wobei dann ein die Kunststoffe lösender Kleber weiter bevorzugt ist.

Auch die seitliche Dichtlippe 55', deren Überlappung 57' auf der Eindeckungsplatte 52 aufliegt, kann dort verschweißt sein, dargestellt durch den die Verschweißung 63 darstellenden Strich. Mit abnehmendem Neigungswinkel alpha geht die seitliche Dichtlippe 55 in die Schürze 61 über, wobei ein Wasserleitungsrand 64 verbleibt. Ferner weist die Schürze 61 einen gewellten Querschnitt auf, vergl. Fig. 15. Durch diesen gewellten Querschnitt ist eine Längenänderung quer zur Dachneigungsrichtung der Schürze 61 ermöglicht und infolge eine gute Anpassung auch an eine gewellte, unter der Schürze 61 liegende Ziegelreihe 65, vergl. Fig. 16. In der Anlage gemäß Fig. 16 an die Ziegelreihe 65 wird die Schürze 61 im wesentlichen durch federnde Versteifungsrippen 66 gehalten, die einen Kern 67 aufweisen, bevorzugt aus einem relativ harten, elastischen Kunststoff. Bei diesem gezeigten Ausführungsbeispiel ist dieser Kern 67 mit der Eindeckungsplatte 52 nicht einstückig ausgebildet, könnte es gleichwohl aber sein. Unterseitig mit Bezug auf die Einbaulage weisen die Versteifungsrippen 66 eine glatte Grundfläche 68 zur Anlage auf der Oberseite der Ziegelreihe 65 auf. Oberseitig greifen die Versteifungsrippen 66 die Kontur des gewellten Querschnittes der Dichtlippe 61 wieder auf. Ziehharmonikaähnlich kann sich der Weg der Schürze 61 zwischen zwei Versteifungsrippen 66 durch flacher werdende Täler 69 bzw. einer Höhenabnahme der Wellenberge 70 ändern und kann sich die Dichtlippe 61 so der Kontur der Ziegelreihe 65 anpassen.

Auch die in Dachneigungsrichtung verlaufenden Dichtlippen, hier im oberen Teil der linken Dichtlippe 73 in Fig. 12 angedeutet, kann ein gewellter Querschnitt derselben mit Tälern 74 und Bergen 75 auch vorgesehen sein. Bei einer derartigen Ausbildung der Dichtlippen, gleichfalls möglich bei der firstseitigen Dichtlippe 76 der Eindeckungsplatte 52, sollten dann insbesondere auch aus Stabilitätsgründen Versteifungsrippen 77 auch wiederum vorgesehen sein.

Die Versteifungsrippen 56, 66 und 77 rufen größere Rückstellkräfte und Vorspannungen in den Dichtlippen 55, 61 und 73 hervor und wirken somit wie eingebaute Federn, die örtlich die Anpreßkraft gegen die Ziegel aufbauen. Die dazwischenliegenden Abschnitte, insbesondere von gewelltem Querschnitt, der Dichtlippen werden sich durch die Anpreßkräfte so besonders gut der Kontur benachbarter Ziegelreihen anpassen. Diese Anpassung erfolgt im wesentlichen im Bereich des freien Randes der Dichtlippen, welche auch hierfür eine abnehmende Wandstärke aufweist. Es bleibt damit eine wannenartige Ausbildung der Dach-Durchgangspfanne insgesamt erhalten, wodurch der Wasserablauf wiederum gewährleistet wird.

Neben den Versteifungsrippen können auch zwischen Versteifungsrippen 56,56 liegende Wandabschnitte 78 einen Kern aus einem elastischen, härteren Plastikmaterial aufweisen. Gegebenenfalls kann dann auch auf Versteifungsrippen 56 gänzlich verzichtet werden und beispielsweise die Dichtlippe 76 einen Querschnitt gemäß Fig. 13 dann auch aufweisen.

## Patentansprüche

1. Dach-Durchgangspfanne für ein Schrägdach, mit einer sich im wesentlichen eben erstreckenden, steifen Kunststoff-Eindeckungsplatte, welche eine Durchtrittsöffnung aufweist, dadurch gekennzeichnet, daß randseitig die Eindeckungsplatte (2) in eine mit der Eindeckungsplatte (2) fest verbundene Dichtlippe (5,6,7,8) aus einem elastischen Kunststoff übergeht.

2. Dach-Durchgangspfanne für ein Schrägdach, mit einer sich im wesentlichen eben erstreckenden Eindeckungsplatte, welche traufseitig einer auf einer Lattung aufliegenden Dachziegel überdeckt, mit den Merkmalen des Anspruches 1, dadurch gekennzeichnet, daß die Eindeckungsplatte (2) unterseitig vorstehend einen Anschlag (23,24) für ihre Abstützung in Dach-Neigungsrichtung auf den Dachziegeln aufweist.

3. Dach-Durchgangspfanne für ein Schrägdach, mit einer sich im wesentlichen eben erstreckenden Eindeckungsplatte, welche traufseitig einen auf einer Lattung aufliegenden Dachziegel überdeckt, der quer zur Dach-Neigungsrichtung eine Oberflächenprofilierung aufweist, mit den Merkmalen eines oder mehrerer der vorhergehenden Ansprüche, dadurch gekennzeichnet, daß die Eindeckungsplatte (2) quer zur Dach-Neigungsrichtung unterseitig vorstehend elastische Zungen (25) in einer Überdeckungsanordnung in Neigungsrichtung für einen dichtenden Anschluß an die Oberfläche der Dachziegel aufweist.

4. Dach-Durchgangspfanne nach einem der vorhergehenden Ansprüche, dadurch gekennzeichnet, daß der Übergang (9) von der Eindeckungsplatte (2) zur Dichtlippe (5,6,7,8) eine form- und/oder kraftschlüssige Ausbildung aufweist.

5. Dach-Durchgangspfanne nach einem der vorhergehenden Ansprüche, dadurch gekennzeichnet, daß die Dichtlippe (5,6,7,8) an die Eindeckungsplatte angespritzt ist.

6. Dach-Durchgangspfanne nach einem der vorhergehenden Ansprüche, dadurch gekennzeichnet, daß die Dichtlippe (61) an die Eindeckungsplatte (52) angeschweißt ist, bevorzugt nach einem Hochfrequenz-Schweißverfahren.

7. Dach-Durchgangspfanne nach einem der vorhergehenden Ansprüche, dadurch gekennzeichnet, daß randseitig geschlossen umlaufend die Eindeckungsplatte (2) in mit der Eindekkungsplatte (2) fest verbundene Dichtlippen (5,6,7,8) aus einem elastischen Kunststoff übergeht.

8. Dach-Durchgangspfanne nach einem der vorhergehenden Ansprüche, dadurch gekennzeichnet, daß der freie Rand einer Dichtlippe (5,6,7,8) gegenüber der Erstreckungsebene der Eindeckungsplatte (2) angestellt ist.

9. Dach-Durchgangspfanne nach einem der vorhergehenden Ansprüche, dadurch gekennzeichnet, daß eine traufseitige Dichtlippe als Schürze (8) ausgebildet gegenüber der Erstreckungsebene der Eindeckungsplatte (2) in Einbaulage nach unten weisend und/oder die weiteren Dichtlippen (5,6,7) nach oben weisend angestellt sind.

10. Dach-Durchgangspfanne nach einem der vorhergehenden Ansprüche, dadurch gekennzeichnet, daß bei einer bevorzugt umlaufenden Ausbildung der Dichtlippen (5,6,7,8) die firstseitige Dichtlippe (5) von den in Dach-Neigungsrichtung sich erstreckenden Dichtlippen (6,7) durch Einschnitte (18,19) getrennt ist, deren tiefster Punkt bevorzugt jeweils auf die Wurzel der Anstellung weist.

11. Dach-Durchgangspfanne nach einem der vorhergehenden Ansprüche, dadurch gekennzeichnet, daß der Anstellwinkel (alpha) zwischen dem angestellten freien Rand (43) einer Dichtlippe (31,32,33) und der Erstreckungsebene der Eindekkungsplatte (30) zum freien Rand (43) hin zunimmt.

12. Dach-Durchgangspfanne nach einem der vorhergehenden Ansprüche, dadurch gekennzeichnet, daß bei einer bevorzugt umlaufenden Ausbildung der Dichtlippen (5,6,7,8) der Anstellwinkel (alpha) der in Neigungsrichtung verlaufenden Dichtlippen (6,7) zur Traufseite hin abnimmt und diese Dichtlippen (6,7) in die Schürze (8) übergehen.

13. Dach-Durchgangspfanne nach einem der vorhergehenden Ansprüche dadurch gekennzeichnet, daß die mit einem Rand (59) der Eindeckungsplatte (52) festverbundenen Dichtlippe (55) Versteifungsrippen (56) aufweist, die sich senkrecht zu dem Rand (59) erstrecken.

14. Dach-Durchgangspfanne nach einem der vorhergehenden Ansprüche, dadurch gekennzeichnet, daß die Dichtlippe (55,62) zumindest abschnittsweise und bevorzugt die Versteifungsrippen (55,66) an einen Kern (61,67) aus einem harten, elastischen Kunststoff aufweist bzw. aufweisen, welcher weiter bevorzugt einstückig mit der Eindeckungsplatte (52) ausgebildet ist.

15. Dach-Durchgangspfanne nach einem der vorhergehenden Ansprüche, daß die mit einem Rand der Dach-Eindeckungsplatte festverbundene Dichtlippe (61) einen gewellten Querschnitt aufweist, wobei die Wellentäler (69) bzw. Wellenberge (70) sich im wesentlichen senkrecht zu dem Rand erstrekken.

16. Dach-Durchgangspfanne nach einem der vorhergehenden Ansprüche gekennzeichnet durch zwei unterseitig abragende Stege (23,24) als Anschlag.

17. Dach-Durchgangspfanne nach einem der vorhergehenden Ansprüche gekennzeichnet durch zwei quer zur Neigungsrichtung verlaufende Reihen (44,45) von Zungen (42), welche gegeneinander auf Lücke versetzt sind.

18. Dach-Durchgangspfanne nach einem der vorhergehenden Ansprüche, gekennzeichnet durch eine quer zur Neigungsrichtung verlaufende Reihe (26) von parallelen Zungen (25), die sich unter einem Winkel zwischen der Neigungsrichtung und quer dazu erstrecken.

## Claims

1. Roof tile with opening for a pitched roof, with a rigid plastic roofing tile which extends essentially flat and which has a through-opening, characterised in that at the edges the roofing tile (2) merges with a sealing lip (5, 6, 7, 8) made of a resilient plastic rigidly connected to the roofing tile (2).

2. Roof tile with opening for a pitched roof, with a roofing tile which extends essentially flat and which on the eaves side overlaps a plain roof tile resting on lathing, with the characteristics of claim 1, characterised in that the roofing tile (2) comprises, protruding on the lower side, a stop (23, 24) for support thereof in the roof pitch direction on the plain tiles.

3. Roof tile with opening for a pitched roof, with a roofing tile which extends essentially flat and which on the eaves side overlaps a plain roof tile resting on lathing and having surface profiling transversely to the roof pitch direction, with the characteristics of one or more of the preceding claims, characterised in that the roofing tile (2) comprises, protruding on the lower side transversely to the roof pitch direction, resilient tongues (25) in an overlapping arrangement in the pitch direction for sealing connection to the surfaces of the plain tiles.

4. Roof tile with opening according to any of the preceding claims, characterised in that the transition (9) from the roofing tile (2) to the sealing lip (5, 6, 7, 8) has a form-locking and/or force-locking construction.

5. Roof tile with opening according to any of the preceding claims, characterised in that the sealing lip (5, 6, 7, 8) is injection-moulded onto the roofing tile.

6. Roof tile with opening according to any of the preceding claims, characterised in that the sealing lip (61) is welded onto the roofing tile (52), preferably by a highfrequency welding method.

7. Roof tile with opening according to any of the preceding claims, characterised in that, peripherally closed at the edges, the roofing tile (2) merges with sealing lips (5, 6, 7, 8) made of a resilient plastic rigidly connected to the roofing tile (2).

8. Roof tile with opening according to any of the preceding claims, characterised in that the free edge of a sealing lip (5, 6, 7, 8) is set relative to the plane of extent of the roofing tile (2).

9. Roof tile with opening according to any of the preceding claims, characterised in that one sealing lip on the eaves side designed as a skirt (8) is set pointing downwards in the fitted position relative to the plane of extent of the roofing tile (2) and/or the other sealing lips (5, 6, 7) are set pointing upwards.

10. Roof tile with opening according to any of the preceding claims, characterised in that, with a preferably peripheral construction of the sealing lips (5, 6, 7, 8), the sealing lip (5) on the ridge side is separated from the sealing lips (6, 7) extending in the roof pitch direction by notches (18, 19) whose lowermost point preferably in each case points towards the root of the setting.

11. Roof tile with opening according to any of the preceding claims, characterised in that the angle of setting (alpha) between the set free edge (43) of a sealing lip (31, 32, 33) and the plane of extent of the roofing tile (30) increases towards the free edge (43).

12. Roof tile with opening according to any of the preceding claims, characterised in that, with a preferably peripheral construction of the sealing lips (5, 6, 7, 8), the angle of setting (alpha) of the sealing lips (6, 7) running in the pitch direction decreases towards the eaves side and these sealing lips (6, 7) merge with the skirt (8).

13. Roof tile with opening according to any of the preceding claims, characterised in that the sealing lip (55) rigidly connected to one edge (59) of the roofing tile (52) comprises reinforcing ribs (56) which extend perpendicularly to the edge (59).

14. Roof tile with opening according to any of the preceding claims, characterised in that the sealing lip (55, 62) at least in sections and preferably comprises the reinforcing ribs (55, 66) on a core (61, 67) made of a hard, resilient plastic which is further preferably designed in one piece with the roofing tile (52).

15. Roof tile with opening according to any of the preceding claims, characterised in that the sealing lip (61) rigidly connected to one edge of the roofing tile has an undulating cross-section, wherein the valleys (69) or peaks (70) of the undulations extend essentially perpendicularly to the edge.

16. Roof tile with opening according to any of the preceding claims, characterised by two webs (23, 24) protruding on the lower side as a stop.

17. Roof tile with opening according to any of the preceding claims, characterised by two rows (44, 45) of tongues (42) running transversely to the pitch direction, which are staggered so as to fill the gaps.

18. Roof tile with opening according to any of the preceding claims, characterised by a row (26) of parallel tongues (25) running transversely to the pitch direction, which extend at an angle between the pitch direction and transversely thereto.

## Revendications

1. Ecaille de traversée de toiture pour un toit incliné, munie d'une plaque de couverture en matière synthétique, rigide, à allure sensiblement plane, présentant une ouverture de passage, caractérisée en ce que la plaque de couverture (2) se transforme, en bordure, en une lèvre d'étanchéité (5, 6, 7, 8) en matière synthétique élastique, reliée rigidement à la plaque de couverture (2).

2. Ecaille de traversée de toiture pour un toit incliné, avec une plaque de couverture à allure sensiblement plane, recouvrant côté chéneau, une tuile reposant sur un lattis, selon les caractéristiques de la revendication 1, caractérisée en ce que la plaque de couverture (2) présente, en saillie en face inférieure, une butée (23, 24) pour assurer son appui sur les tuiles du toit, dans la direction d'inclinaison de la toiture.

3. Ecaille de traversée de toiture pour un toit incliné, avec une plaque de recouvrement à allure sensiblement plane, recouvrant, côté chéneau, une tuile reposant sur un lattis, présentant un profilage de surface, transversalement par rapport à la direction d'inclinaison du toit, selon les caractéristiques d'une ou plusieurs des revendications précédentes, caractérisée en ce que la plaque de couverture (2) présente des languettes (25) élastiques, faisant saillie en face inférieure, transversalement par rapport à la direction d'inclinaison du toit, en un agencement à recouvrement, dans la direction d'inclinaison, pour assurer un raccordement étanche à la surface des tuiles du toit.

4. Ecaille de traversée pour toiture selon l'une des revendications précédentes, caractérisée en ce que la transition (9) entre la plaque de toiture (2) et la lèvre d'étanchéité (5, 6, 7, 8) présente une configuration à liaison par ajustement de forme et/ou interaction de forces.

5. Ecaille de traversée pour toiture selon l'une des revendications précédentes, caractérisée en ce que la lèvre d'étanchéité (5, 6, 7, 8) est surmoulée par injection, sur la plaque de couverture.

6. Ecaille de traversée pour toiture selon l'une des revendications précédentes, caractérisée en ce que la lèvre d'étanchéité (61) est soudée à la plaque de couverture (52), de préférence selon un procédé de soudage à haute fréquence.

7. Ecaille de traversée pour toiture selon l'une des revendications précédentes, caractérisée en ce que, sur la bordure, en étant fermée en pourtour, la plaque de couverture (2) se transforme en des lèvres d'étanchéité (5, 6, 7, 8) en matière synthétique élastique, reliées rigidement à la plaque de couverture (2).

8. Ecaille de traversée pour toiture selon l'une des revendications précédentes, caractérisée en ce que le bord libre d'une lèvre d'étanchéité (5, 6, 7, 8) est orienté angulairement par rapport au plan dans lequel s'étend la plaque de couverture (2).

9. Ecaille de traversée pour toiture selon l'une des revendications précédentes, caractérisée en ce qu'une lèvre d'étanchéité, située côté chéneau, est réalisée sous la forme de tablier (8) par rapport au plan dans lequel s'étend la plaque de couverture (2), en étant tournée vers le bas en position de montage et/ou en ce que les autres lèvres d'étanchéité (5, 6, 7) sont orientées angulairement en étant tournées vers le haut.

10. Ecaille de traversée pour toiture selon l'une des revendications précédentes, caractérisée en ce que, dans le cas d'une configuration préférée faisant le pourtour, des lèvres d'étanchéité (5, 6, 7, 8), la lèvre d'étanchéité (5) située du côté du faîte est séparée des lèvres d'étanchéité (6, 7) s'étendant dans la direction d'inclinaison du toit, par des entailles (18, 19) dont le point le plus profond est orienté de préférence, chaque fois vers la racine, du pliage angulaire.

11. Ecaille de traversée pour toiture selon l'une des revendications précédentes, caractérisée en ce que l'angle d'orientation (alpha), entre le bord libre (4) incliné d'une lèvre d'étanchéité (31, 32, 33) et le plan dans lequel s'étend la plaque de couverture (3), augmente en direction du bord libre (43).

12. Ecaille de traversée pour toiture selon l'une des revendications précédentes, caractérisée en ce que, dans le cas d'une configuration préférée faisant le pourtour, des lèvres d'étanchéité (5, 6, 7, 8), l'angle d'orientation (alpha) des lèvres d'étanchéité (6, 7), s'étendant dans la direction de l'inclinaison, diminue en direction du côté du chéneau et en ce que ces lèvres d'étanchéité (6, 7) se transforment en le tablier (8).

13. Ecaille de traversée pour toiture selon l'une des revendications précédentes, caractérisée en ce que la lèvre d'étanchéité (55), reliée rigidement à un bord (59) de la plaque de couverture (52), présente des nervures de rigidification (56) qui s'étendent perpendiculairement au bord (59).

14. Ecaille de traversée pour toiture selon l'une des revendications précédentes, caractérisée en ce que la lèvre d'étanchéité (55, 62) présente au moins par tronçons et, de préférence, les nervures de rigidification (55, 56) sur un noyau en une matière synthétique élastique dure, qui, de manière encore mieux préférée, est réalisée d'une seule pièce avec la plaque de couverture (52).

15. Ecaille de traversée pour toiture selon l'une des revendications précédentes, caractérisée en ce que la lèvre d'étanchéité (61) reliée rigidement à un bord de la plaque de couverture du toit présente une section transversale ondulée, les creux d'ondulation (69) ou les sommets d'ondulation (70) s'étendant pratiquement perpendiculairement au bord.

16. Ecaille de traversée pour toiture selon l'une des revendications précédentes, caractérisée par deux nervures (23, 24) faisant saillie en face inférieure et servant de butées.

17. Ecaille de traversée pour toiture selon l'une des revendications précédentes, caractérisée par deux rangées (44, 45), s'étendant transversalement par rapport à la direction d'inclinaison, de languettes (42), décalées les unes par rapport aux autres en laissant un vide.

18. Ecaille de traversée pour toiture selon l'une des revendications précédentes, caractérisée par une rangée (26), s'étendant transversalement à la direction d'inclinaison, de languettes (25) parallèles qui s'étendent sous un certain angle, compris entre la direction d'inclinaison et la perpendiculaire à cette direction.
